(19) Europäisches Patentamt
European Patent Office
Office européen des brevets

(11) **EP 4 517 398 A1**

(12) **EUROPEAN PATENT APPLICATION**

(43) Date of publication:
**05.03.2025 Bulletin 2025/10**

(21) Application number: **24191566.9**

(22) Date of filing: **29.07.2024**

(51) International Patent Classification (IPC):
**G02B 6/028** (2006.01)   **G02B 6/036** (2006.01)

(52) Cooperative Patent Classification (CPC):
**G02B 6/0285; G02B 6/0281; G02B 6/03627;
G02B 6/0365;** G02B 6/02395

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.08.2023 IN 202311052813**

(71) Applicant: **Sterlite Technologies Limited
Gurugram, Haryana 122102 (IN)**

(72) Inventors:
• **MALVIYA, Apeksha**
  122102 Gurugram (IN)
• **DIGARSE, Harshika**
  122102 Gurugram (IN)
• **MUNIGE, Srinivas**
  122102 Gurugram (IN)
• **PANDEY, Anand**
  122102 Gurugram (IN)

(74) Representative: **Valet Patent Services Limited
c/o Caya 83713X
Am Börstig 5
96052 Bamberg (DE)**

(54) **OPTICAL FIBER AND OPTICAL FIBER RIBBON**

(57)    The present disclosure relates to an optical fiber (100, 101, 103, 105, 107) having a core region (102) and a cladding region (104). In particular, the cladding region (104) has exactly one down-doped region (210, 310) and an undoped region (212, 312). The down doped region (210, 310) is a continuous region adjacent to core region (102) such that radial position of minimum relative refractive index (214, 314) of the optical fiber (100, 101, 103, 105, 107) is within 3 micrometers ($\mu$m) from interface between the down doped region (210, 310) and the undoped region (212, 312). Further, the mode field diameter of the optical fiber (100, 101, 103, 105, 107) is in range of 8.8 $\mu$m to 9.6 $\mu$m at a wavelength 1310 nanometres (nm), and cable cut-off of the optical fiber (100, 101, 103, 105, 107) is less than or equal to 1260 nm.

FIG. 1A

**EP 4 517 398 A1**

## Description

### TECHNICAL FIELD

Embodiments of the present disclosure relate to the field of optical telecommunication systems, and more particularly, relates to an optical fiber and an optical fiber cable.

This application claims the benefit of Indian Application No. " 202311052813" titled "OPTICAL FIBER AND OPTICAL FIBER RIBBON" filed by the applicant on August 7, 2023, which is incorporated herein by reference in its entirety.

### Background Art

Optical fiber is the leading alternative to traditional materials used for data signal communication such as copper wiring. Optical fiber is now widely utilized in a variety of electronic devices and systems to facilitate the high-speed communication of voice, video, and data signals at high bandwidths.

Nowadays, optical fibers are widely used to transmit information or data in the form of light from one place to another. The optical fibers are disposed within the optical fiber cable. Fiber optic cables include one or more optical fibers or other optical waveguides that conduct optical signals, for example carrying voice, data, video, or other information.

Optical fibers are suitable in regional, metro, access, mobile, FTTH and 5G applications where high-density cables and accessories are being manufactured. Increasing adoption of FTTH and 5G architectures has led to wider application of bend-insensitive fibers because they ensure low losses in these high-density networks.

The fields of data communications and telecommunications, optical fibers with small diameters are attracting attention as optical fibers that realize dense optical fiber cables. An optical fiber with a small diameter is in general an optical fiber in which a portion made of glass has a small diameter and the cladding diameter is small. Note that optical fibers with small diameters also include one whose outer circumference with a coating, formed such that the coating covers the outer circumference of a cladding, included is small because the cladding diameter is small.

Optical fiber cables are a critical component of a modern communications network across the globe. As the data and data rate requirement increases, more optical fibers are required in the network to support higher capacity and speed. Data centers are continuously trying to meet the challenges of delivering more bandwidth networks. However, attributes such as attenuation and bend loss are a few significant factors aiding the degradation of signals and channel capacity.

Prior art reference "EP3657223A1" discloses an optical fiber having a depressed layer between a core and a cladding such that a minimum refractive index of the optical fiber is near the core boundary of the optical fiber which may fail to achieve the required optimum optical parameters. For optical fibers, the refractive index profile is generally classified according to the graphical appearance of the function that associates the refractive index with the radius of the optical fiber. These curves are generally representative of the optical fibers theoretical or set profile. Constraints in the manufacture of the optical fiber, however, may result in a slightly different actual profile.

Conventional optical fibers have huge trench depth which is designed to meet the need of FTTH application where optical fiber is operated at a very critical bend value (for ex. 5 mm or 7.5 mm bend radius). Optical fiber having reduced (low) glass diameter and overall diameter are the need of the market which enables high density cables with small diameters which allow service providers to maximize the number of fibers that can be installed in existing ducts or to minimize the size or even the need for new ducting and related infrastructure. The low bend loss extends to the longer wavelengths which are required for advanced and future systems.

The surge in FTTH and 5G applications demands high-density optical fiber cables, necessitating bend-insensitive fibers for low losses in dense networks. Existing solutions, such as those revealed in EP3657223A1, may fall short in achieving optimum optical parameters due to the placement of a depressed layer. Conventional fibers designed for FTTH applications have excessive trench depth. Therefore, a market need exists for an optical fiber that reduces manufacturing costs while optimizing optical parameters for network access applications.

Further, optical fiber solutions, including those disclosed in EP3657223A1, suffer from potential drawbacks like failing to achieve optimum optical parameters. Additionally, conventional fibers designed for FTTH applications exhibit excessive trench depth, not ideally suited for network access scenarios.

While the prior arts cover various solutions for the aforesaid drawbacks related to material wastage and high production cost. However, there still remains a need to provide a technical solution that overcomes the aforementioned problems of the traditional optical fibers. Thus, the present disclosure provides an optical fiber and an optical fiber cable with reduced manufacturing cost and optimized optical parameters while using the optical fiber in network access application.

There is a persistent need for an optical fiber that balances reduced manufacturing costs with optimized optical parameters, specifically tailored for network access applications. Addressing this gap would significantly enhance the efficiency and performance of optical fiber networks. The manufacturing cost is reduced by the unique design of the disclosed optical fiber.

## SUMMARY OF THE DISCLOSURE

Embodiments of the present disclosure relates to an optical fiber comprising one or more core regions such that the one or more core regions cis an up doped region and a cladding region that surrounds the one or more core regions. In particular, the cladding region has exactly one down doped region and an undoped region. The down doped region is a continuous region adjacent to the one or more core region such that a radial position of minimum relative refractive index of the optical fiber is within three micrometers ($\mu$m) from an interface between the down doped region and the undoped region. Further, the optical fiber has a mode field diameter in a range of 8.8 $\mu$m to 9.6 $\mu$m at a wavelength 1310 nanometres (nm), and a cable cut-off of less than or equal to 1260 nm.

According to the first aspect of the present disclosure, the down-doped region has a trench volume in a range of 3 to 4.5 $\mu$m$^2$.

According to the second aspect of the present disclosure, the down doped region has a trench alpha in range of 1 to 3.

According to the third aspect of the present disclosure, the down-doped region has a minimum relative refractive index in a range of -0.05 to -0.21 %.

According to the fourth aspect of the present disclosure, the down-doped region has a thickness in a range of 8 $\mu$m to 12 $\mu$m.

According to the fifth aspect of the present disclosure, the one or more core regions does not have a sharp peak at a center (R0) of the one or more core regions.

According to the second aspect of the present disclosure, optical fiber has

(i) an attenuation of the optical fiber (100, 101, 103, 105) at 1310 nm wavelength is less than or equal to 0.33 Decibel (dB),
(ii) an attenuation of the optical fiber at 1383 nm wavelength is less than or equal to 0.31 dB,
(iii) an attenuation of the optical fiber at 1550 nm wavelength is less than or equal to 0.19 dB, and
(iv) an attenuation of the optical fiber at 1625 nm wavelength is less than or equal to 0.21 dB.

According to the sixth aspect of the present disclosure, the optical fiber has at least one of

(i) a macro bend loss of the optical fiber at 10 mm bend radius and 1625 nm wavelength is less than or equal to 1.5 dB/turn and
(ii) a macro bend loss of the optical fiber at 15 mm bend radius and 1625 nm wavelength is less than or equal to 0.3 dB/turn.

According to the seventh aspect of the present disclosure, the core region has

(i) a core volume in a range of 4.5 to 5.5 $\mu$m$^2$,
(ii) a core relative refractive index in a range of 0.37 to 0.44 %, and
(iii) a core alpha value in a range of 3 to 6.

According to the eighth aspect of the present disclosure, a primary coating layer (108) surrounding the cladding region has a young's modulus in a range of 0.1 to 0.3 MPa and a secondary coating layer (112) surrounding the primary coating layer (108) has a young's modulus in a range of 1200 to 1500 MPa.

According to the second aspect of the present disclosure, the optical fiber is used in an optical fiber ribbon (400) such that adjacent optical fibers are bonded. In particular, at least one pair of adjacent optical fibers are bonded intermittently.

The foregoing objectives of the present disclosure are attained by providing an optical fiber and an optical fiber cable with reduced manufacturing cost and optimized optical parameters.

## BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.

Fig. 1A is a pictorial snapshot illustrating a cross-sectional representation of an optical fiber in accordance with an embodiment of the present disclosure;

Fig. 1B is a pictorial snapshot illustrating a cross-sectional representation of another optical fiber in accordance with an embodiment of the present disclosure;

Fig. 1C is a pictorial snapshot illustrating a cross-sectional representation of yet another optical fiber in accordance with an embodiment of the present disclosure;

Fig. 1D is a pictorial snapshot illustrating a cross-sectional representation of yet another optical fiber in accordance with an embodiment of the present disclosure;

Fig. 1E is a pictorial snapshot illustrating a cross-sectional representation of yet another optical fiber in accordance with an embodiment of the present disclosure;

Fig. 2 is a graphical representation illustrating of a refractive index profile of one optical fiber in accordance with an embodiment of the present disclosure;

Fig. 3 is a graphical representation illustrating of a refractive index profile of another optical fiber in accordance with an embodiment of the present disclosure;

Fig. 4 is a pictorial snapshot illustrating an optical fiber ribbon in accordance with an embodiment of the present disclosure;

Fig. 5 is a pictorial snapshot illustrating a cross-sectional view of an optical fiber cable in accordance with an embodiment of the present disclosure.

The optical fiber cable is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

## DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

**The following brief definition of terms shall apply throughout the present**

**disclosure:**

The term "optical fiber" as used herein refers to a light guide that provides high-speed data transmission. The optical fiber has one or more glass core regions and a glass cladding region. The light moving through the glass core regions of the optical fiber relies upon the principle of total internal reflection, where the glass core regions have a higher refractive index ($n1$) than the refractive index ($n2$) of the glass cladding region of the optical fiber.

The term "core region" as used herein refers to the inner most cylindrical structure present in the centre of the optical fiber, that is configured to guide the light rays inside the optical fiber.

The term "cladding" as used herein refers to one or more layered structure covering the core of an optical fiber from the outside, that is configured to possess a lower refractive index than the refractive index of the core to facilitate total internal reflection of light rays inside the optical fiber. Further, the cladding of the optical fiber may have an inner cladding layer coupled to the outer surface of the core of the optical fiber and one or more intermediate and/or outer cladding layers surrounding the inner cladding.

The term "optical fiber cable" as used herein refers to a cable that encloses a plurality of optical fibers.

The term "intermittently bonded ribbon (IBR)" as used herein are the bundles of the optical fibers such that a pair of optical fibers are intermittently bonded along a predefined length of the optical fiber.

The term "trench" as used herein is referred to as a down-doped region with a higher down dopant concentration to decrease the refractive index of the down doped region with respect to pure silica.

The term "refractive index" as used herein is referred to as the measure of change of speed of light from one medium to another and is particularly measured in reference to speed of light in vacuum. More specifically, the refractive index facilitates measurement of bending of light from one medium to another medium.

The term "relative refractive index" as used herein is defined as ,

$$\Delta\% = 100 \times \frac{ni^2 - n^2}{2ni^2}$$

where ni is maximum refractive index in region i of an optical fiber unless otherwise specified, and n is the average refractive index of an undoped region of the optical fiber. As used herein, the values of the relative refractive index are given in units of "%", unless otherwise specified. In some cases where the refractive index of a region is less than the average refractive index of an undoped region, the relative refractive index percentage is negative, and the region is referred to as a trench region.

The term "relative refractive index difference" as used herein is referred to as a measure of the relative difference in refractive index between two optical materials. As used herein, the relative refractive index difference is represented by $\Delta$ and its values are given in units of "%", unless otherwise specified. In some cases where the refractive index of a region is less than the average refractive index of an undoped region, the relative refractive index percentage is negative, and the region is referred to as a trench region.

The term "reduced diameter optical fiber" as used herein refers to an optical fiber as disclosed in the present disclosure having a diameter range of 60 micrometers ($\mu$m) to 125 $\mu$m with a tolerance of $\pm$ 0.7 $\mu$m. Such optical fibers have very less peripheral clad thickness. The reduced diameter optical fiber significantly increases the packing density of the optical fiber cables.

The term "un doped" as used herein is referred to as a material that is not intentionally doped, or which is pure silica. However, there are always chances of some diffusion of dopants in the region which is negligible.

The term "core volume" as used herein is defined as a volume acquired by the core with respect to the core radius Rc. The core volume may have a magnitude in micrometers square ($\mu$m$^2$) that may be determined by the following equation:

$$= \int_0^{Rc} \square\, \Delta\,(r)\, r dr$$

wherein Rc is the radius of the core.

The term "trench volume" as used herein is defined as a volume acquired by region between the core radius Rc and a trench radius R1. The trench volume may have a magnitude in $\mu$m$^2$ that may be determined by the following equation:

$$= \int_{Rc}^{R1} \square\, \Delta\,(r)\, r dr$$

wherein Rc is the radius of the core,
R1 is trench radius i.e., radius of the down-doped region.

The term "core peak" as used herein is referred to as the maximum refractive index value of the core of the optical fiber.

The term "sharp peak" as used herein is referred to a sudden dip or sudden rise in the relative refractive index profile.

The term "reduced diameter optical fiber" as used herein is referred to as an optical fiber as disclosed in the present disclosure having a diameter range less than to 125 micrometers ($\mu$m) with a tolerance of $\pm$ 0.7 $\mu$m. Such optical fibers have very less peripheral clad thickness. The reduced diameter optical fiber significantly increases the packing density of the optical fiber cables.

The term "refractive index profile" (also termed as relative refractive index profile $\Delta$(r)) of the optical fiber as used herein is referred to as a distribution of refractive indexes in the optical fiber from the core to the outmost cladding layer of the optical fiber. Based on the refractive index profile, the optical fiber may be configured as a step index fiber. The refractive index of the core of the optical fiber is constant throughout the fiber and is higher than the refractive index of the cladding. Further, the optical fiber may be configured as a graded index fiber, wherein the refractive index of the core gradually varies as a function of the radial distance from the center of the core.

The term "down doped" as used herein is referred to as addition of doping materials to facilitate decrease in the refractive index of a particular layer or part of optical fiber. The materials configured to facilitate down-doping are known as down-dopants. Specifically, at least one down dopant as used herein is Fluorine.

The term "up doped" as used herein is referred to as addition of doping materials to facilitate increase in the refractive index of a particular layer or part of optical fiber. The materials configured to facilitate up-doping are known as up-dopants. Specifically, the up dopant as used herein is one of Germanium and Chlorine.

The term "Mode Field Diameter (MFD)" as used herein is referred to as the size of the light-carrying portion of the optical fiber. For single-mode optical fibers, this region has the optical fiber core as well as a small portion of the surrounding cladding glass of the optical fiber. The selection of desired MFD helps to describe the size of the light-carrying portion of the optical fiber.

The term "macro bend loss" as used herein is referred to as the losses induced in bends around mandrels (or corners in installations), generally more at the cable level or for fibers. The macro bend loss occurs when the fiber cable is subjected to a significant amount of bending above a critical value of curvature. The macro bend loss is also defined as large radius loss. The macro bend loss is measured as per IEC standards. The optical fiber with lower macro bend loss is required for better performance in optical network, especially during the cable termination.

The term "micro bend loss" as used herein is referred to as a loss in an optical fiber that relates to a light signal loss associated with lateral stresses along a length of the optical fiber. The micro bend loss is due to coupling from the optical fiber's guided fundamental mode to lossy modes or cladding modes.

The term "Zero Dispersion Wavelength (ZDW)" as used herein is referred to as a wavelength at which the value of a dispersion coefficient is zero. In general, ZDW is the wavelength at which material dispersion and waveguide dispersion cancel one another.

The term "attenuation" as used herein is referred to as reduction in power of a light signal as it is transmitted. Specifically, the attenuation is caused by Rayleigh scattering, absorption of the light signal, and the like. The attenuation in an optical fiber is measured with Optical Time Domain Reflectometer (OTDR) device as per IEC standards. The optical fiber disclosed in the present disclosure has low attenuation which helps in increasing the link length of an optical fiber and/or optical fiber cable.

The term "cable cut-off wavelength" as used herein refers to a wavelength above which a single-mode fiber will support and propagate only one mode of light.

The optical fiber transmits a single mode of optical signal above a pre-defined cut-off wavelength known as cable cut-off wavelength measured on 22 meters sample length of the optical fiber.

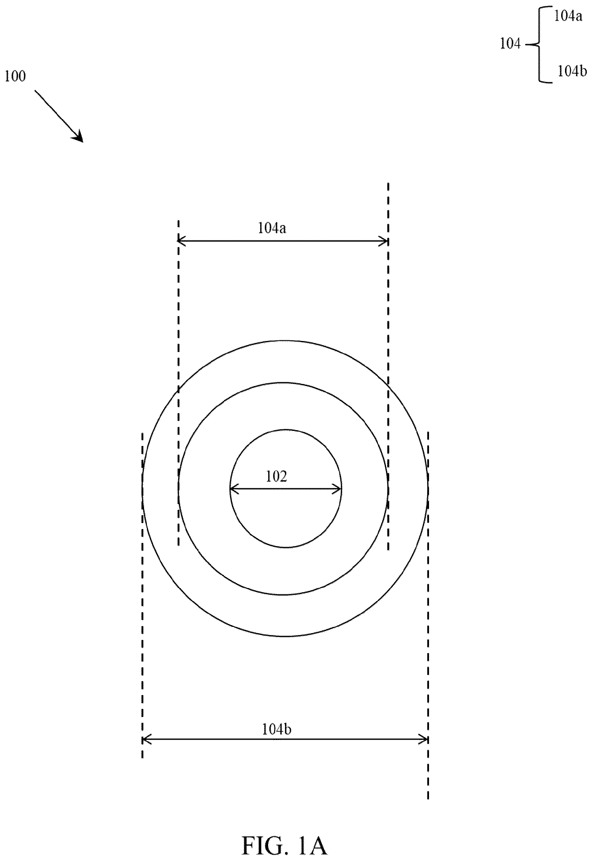

Fig. 1A- 1E are pictorial snapshots illustrating cross-sectional representations of one or more optical fibers in accordance with different embodiments of the present disclosure. The optical fiber 100 may achieve low bend insensitivity and tighter attenuation which may meet and exceed ITU-T G.652.D and G.657.A1 recommendations. The optical fiber 100 may have a refractive index profile that may be modified in such a way that the optical fiber 100 may become very cost effective and may become an ideal choice for network access application. The optical fiber 100 may be independent of any buffer clad region i.e., the optical fiber 100 is free from any pure silica region adjacent to a core region of the optical fiber 100.

The optical fiber 100 may be free from any pure silica region and thereby may reduce manufacturing time, cost and/or process steps while manufacturing the optical fiber 100 and may simultaneously achieve the better MFD and other waveguide parameters. The optical fiber 100 may be used in an access network application. The optical fiber 100 may be further used in a long-haul communication with the entire spectrum range 1260-1625 nanometres. The optical fiber 100 may have low attenuation as compared to G652D category optical fiber and may has improved bend sensitivity. The optical fiber 100 may comply with ITU G657A1 standard and may achieve better optical parameters and waveguide parameters.

In accordance with an embodiment of the present disclosure, the optical fiber 100 may have a core region 102 and a cladding region 104. In particular, the cladding region 104 may have an inner cladding region 104a and an outer cladding region 104b. Moreover, the optical fiber 100 may have a mode field diameter that may be in a range of 8.8 micrometers ($\mu$m) to 9.6 $\mu$m at a wavelength 1310 nanometres (nm). If the mode field diameter of an optical fiber is below 8.8 $\mu$m, the optical fiber may not be compatible for long haul application and access network application. If the mode file diameter of an optical fiber is above 9.6 $\mu$m, the light confinement in the optical fiber is very poor which induces more bend losses such as macro bend and micro bending losses. Further, the optical fiber 100 may have a cable cut-off value that may be less than or equal to 1260 nm. If the cable cut-off value of an optical fiber is above 1260 nm, the optical fiber may not be compatible with typical telecommunication application and 1280 nm to 1310 nm window may not be used in a single mode operation for telecommunication application of the optical fiber.

In accordance with one embodiment of the present disclosure, the attenuation of the optical fiber 100 at 1310 nm wavelength may be less than or equal to 0.33 Decibel (dB). In alternative embodiment, the attenuation of the optical fiber 100 at 1383 nm wavelength may be less than or equal to 0.31 dB. In yet another alternative embodiment, the attenuation of the optical fiber 100 at 1550 nm wavelength may be less than or equal to 0.19 dB. In yet another alternative embodiment, the attenuation of the optical fiber 100 at 1625 nm wavelength may be less than or equal to 0.21 dB.

In accordance with an embodiment of the present disclosure, the macro bend loss of the optical fiber 100 at 10 millimeters (mm) bend radius and 1625 nm wavelength may be less than or equal to 1.5 dB per unit turn i.e., 1.5 dB/turn. In an alternative embodiment, the macro bend loss of the optical fiber 100 at 15 mm bend radius and 1625 nm wavelength may be less than or equal to 0.3 dB per unit turn i.e., 0.3 dB/turn.

In accordance with an embodiment of the present disclosure, the optical fiber 100 may have a zero-dispersion wavelength (ZDW) value that may be in a range of 1300 nm to 1324 nm.

In accordance with an embodiment of the present disclosure, the core region 102 may be disposed at a center of the optical fiber 100. In particular, the core region 102 may be an up doped region 208, 308 and is a high relative refractive index region. Moreover, the core region 102 may be up-doped with a plurality of up-dopant materials (hereinafter referred to as "the up-dopant materials"). The up-dopant materials may be, but not limited to, chlorine, Germanium (Ge), aromatic group material, sulfur atoms, halogens, and phosphorous based group materials. Aspects of the present disclosure are intended to include and/or otherwise cover any type of known and later developed up-dopant materials, without deviating from the scope of the present disclosure.

Further, the core region 102 may have a core volume that may be in a range of 4.5 $\mu$m$^2$ to 5.5 $\mu$m$^2$, a core relative refractive index that may be in a range of 0.37 % to 0.44 %, and a core alpha value that may be in a range of 3 to 6. If the core volume of an optical fiber is more, the cable cut-off of the optical fiber will be greater than 1260 nm, and the optical fiber will not show the property of single mode fiber and if core volume of the optical fiber is less, the light confinement in the optical fiber is poor as mode field diameter will be greater than 9.6 $\mu$m which subsequently increase the bend losses.

In accordance with an embodiment of the present disclosure, the cladding region 104 may be positioned adjacent to the core region 102 such that the cladding region 104 surrounds the core region 102. In particular, the inner cladding region 104a may be positioned adjacent to the core region 102 such that the inner cladding region 104a surrounds the core region 102. Moreover, the outer cladding region 104b may be positioned adjacent to the inner cladding region 104a. Specifically, the outer cladding region 104b may be positioned adjacent to the outer cladding region 104b such that the outer cladding region 104b surrounds the inner cladding region 104a. Further, the cladding region 104 may have exactly one down doped region 210, 310 and an undoped region 212, 312.

Specifically, the inner cladding region 104a may have the one down doped region 210, 310 and the outer cladding region 104b may have the undoped region 212, 312. The down doped region 210, 310 may be a continuous region that may be adjacent to the core region 102 such that a minimum relative refractive index 214, 314 of the optical fiber 100 may be near to an interface between the down doped region 210, 310 and the undoped region 212, 312. An inner boundary and an outer boundary of the down doped region 210, 310 may be identified by radial interfaces in the optical fiber 100.

In accordance with an embodiment of the present disclosure, the continuous region may be defined as there may be no buffer region (un doped region) between the core region 102 and the down doped region 210, 310. If there is a buffer region adjacent to the core region 102, the mode field diameter of the optical fiber 100 may increase beyond 9.6 $\mu$m which may impact the confinement of light in the core region 102 and subsequently increases the macro bend loss of the optical fiber 100.

In accordance with an embodiment of the present disclosure, a radial position of the minimum relative refractive index 214, 314 of the optical fiber 100 may be within three $\mu$m from the interface between the down doped region 210, 310 and the undoped region 212, 312. The radial position of the minimum relative refractive index 214, 314 of the optical fiber 100 may help to achieve optimized mode field diameter as required in the optical fiber 100 of the present disclosure. If the radial position of the minimum relative refractive index 214, 314 of the optical fiber 100 is not designed properly, this will lead to very low mode field diameter.

In accordance with an embodiment of the present disclosure, the interface between the down doped region 210, 310 and the undoped region 212, 312 may lie at a radial distance of 12 $\mu$m to 20 $\mu$m from a center of the optical fiber 100.

In accordance with an embodiment of the present disclosure, the down doped region 210, 310 may have a trench alpha in a range of 1 to 3. The down doped region 210, 310 may further have a trench volume in a range of 3 $\mu$m$^2$ to 4.5 $\mu$m$^2$. If the trench volume of an optical fiber is very less, this may lead to significant rise in bend losses of the optical fiber and if the trench volume is very high, the cable cut-off value of the optical fiber may increase beyond 1260 nm and mode field diameter may decrease below 8.8 $\mu$m.

In accordance with an embodiment of the present disclosure, the down doped region 210, 310 may have a thickness in a range of 8 μm to 12 μm.

In accordance with an embodiment of the present disclosure, e, the core region 102 and the cladding region 104 may be made up of a material including, but not limited to, glass. The core region 102 and the cladding region 104 may have a diameter i.e., a glass diameter of the optical fiber 100 that may be less than or equal to 125 μm with a tolerance value of ± 0.7 μm i.e., 125 ± 0.7 μm. Aspects of the present disclosure are intended to include and/or otherwise cover any type of known and later developed materials for the core region 102 and the cladding region 104.

In accordance with an embodiment of the present disclosure, the core region 102 may have a radius $R_c$ in a range of 4 μm to 5.5 μm and a relative refractive index Δc in a range of 0.37% to 0.44%. The core region 102 may have a core volume in a range of 4.5 μm$^2$ to 5.5 μm$^2$. a core alpha value 'ac' that may be in a range of 3 to 6. The core region 102 may have a relative refractive index difference (N) that may be in a range of 0.0055 to 0.0065. The refractive index difference (N) as used herein may be the difference between the refractive index of the core region 102 and refractive index of pure silica.

In first example of the present disclosure, the radius $R_c$ of the core region 102 may be 4.43 μm, the relative refractive index Δc of the core region 102 may be 0.4%, the core volume of the core region 102 may be 4.776 μm$^2$, the core alpha value 'ac' of the core region 102 may be 3, and the refractive index difference (N) of the core region 102 may be 0.0058.

In second example of the present disclosure, the radius $R_c$ of the core region 102 may be 4.5 μm, the relative refractive index Δc of the core region 102 may be 0.38%, the core volume of the core region 102 may be 4.81 μm$^2$, the core alpha value 'ac' of the core region 102 may be 3.4, and the relative refractive index difference (N) of the core region 102 may be 0.0056.

In third example of the present disclosure, the radius $R_c$ of the core region 102 may be 4.4 μm, the relative refractive index Δc of the core region 102 may be 0.41 %, the core volume of the core region 102 may be 4.8 μm$^2$, the core alpha value 'ac' of the core region 102 may be 4, and the refractive index difference (N) of the core region 102 may be 0.006.

In fourth example of the present disclosure, the radius $R_c$ of the core region 102 may be 5.1 μm, the relative refractive index Δc of the core region 102 may be 0.38%, the core volume of the core region 102 may be 4.75 μm$^2$, the core alpha value 'ac' of the core region 102 may be 5, and the relative refractive index difference (N) of the core region 102 may be 0.0049.

In fifth example of the present disclosure, the radius $R_c$ of the core regions 102 may be 5.8 μm, the relative refractive index Δc of the core region 102 may be 0.39, the core volume of the core region 102 may be 5.2 μm$^2$, the core alpha value 'ac' of the core region 102 may be 4, and the refractive index difference (N) of the core region 102 may be 0.0057.

In accordance with an embodiment of the present disclosure, the relative refractive index profile of the core region 102 may be the alpha profile such that the core refractive index 'N' may be derived from the core alpha value "ac" of the peak shaping parameter alpha. Alternatively, the core alpha value "ac" of the core 102 may be in a range of 3 to 6. The core refractive index 'N' may further be dependent on a core peak with a maximum refractive index value '$N_{max}$' (i.e., a maximum value of the core refractive index 'N'), the core radius 'Rc', the core relative refractive index difference 'Δc', and a radial position 'r' from a center of the optical fiber 100. In an exemplary aspect of the present disclosure, the core refractive index 'N' at the radial distance 'r' can be determined as:

$$N(r) = N_{max}\left(1 - 2\Delta c\left(\frac{r}{Rc}\right)^{\alpha c}\right)^{1/2}.$$

In accordance with an embodiment of the present disclosure, the down doped region 210, 310 may have a radius R1 may be in a range of 12 μm to 20 μm, the down doped region 210, 310 may have a refractive index difference (N1) may be in a range of -0.0005 to -0.003. The refractive index difference (N1) as used herein refers to a difference between the refractive index of the cladding region 104 and the refractive index of pure silica. The down doped region 210, 310 may further have a relative refractive index Δ1 that may be in a range of -0.05% to -0.21%. The down doped region 210, 310 may further have a trench volume that may be in a range of 3 μm$^2$ to 4.5 μm$^2$.

In first example of the present disclosure, the R1 may be 15 μm, the relative refractive index difference (N1) may be -0.0025, the relative refractive index Δ1 may be -0.17%, and the trench volume may be 3.361 μm$^2$.

In the second example of the present disclosure, the R1 may be 17 μm, the refractive index difference (N1) may be -0.0027, the relative refractive index Δ1 may be -0.18%, and the trench volume may be 3.5 μm$^2$.

In the third example of the present disclosure, the R1 may be 13 μm, the refractive index difference (N1) may be -0.002, the relative refractive index Δ1 may be -0.14%, and the trench volume may be 3.35 μm$^2$.

In the fourth example of the present disclosure, the R1 may be 16 μm, the refractive index difference (N1) may be -0.0015, the relative refractive index Δ1 may be -0.1%, and the trench volume may be 3.3 μm$^2$.

In the fifth example of the present disclosure, the R1 may be 15 $\mu$m, the refractive index difference (N1) may be -0.0006, the relative refractive index $\Delta$1 may be 0.05%, and the trench volume may be 3 $\mu$m$^2$.

In accordance with an embodiment of the present disclosure, the relative refractive index profile of the down doped region 210, 310 may be the alpha profile such that the refractive index 'N1'of the down doped region 210, 310 may be derived from the trench alpha value "a1' of the peak shaping parameter alpha.

In accordance with an embodiment of the present disclosure, the trench alpha value 'a1' of the down doped region 210, 310 may be in a range of 1 to 3. The refractive index 'N1' may further be dependent on a minimum refractive index value 'N1min' (i.e., a minimum value of the refractive index 'N1' of the down doped region 210, 310), the core radius 'Rc', the radius 'R1' of the down doped region 210, 310, the relative refractive index difference '$\Delta$1' of the down doped region 210, 310, and the radial position 'r' from a center of the optical fiber 100. In an exemplary aspect of the present disclosure, the refractive index 'N1' at the radial distance 'r' can be determined as:

$$N1(r) = N1_{min} \left( 1 - 2\Delta1\{\frac{(r-R1)}{(Rc-R1)}\}^{\alpha1} \right)^{1/2}$$

In accordance with an embodiment of the present disclosure, the undoped region 212, 312 may have a relative refractive index $\Delta$2 is in a range of -0.01 % to 0.01% and a radius R2 in a range of 62.15 $\mu$m to 62.85 $\mu$m. In an exemplary disclosure, the relative refractive index $\Delta$2 may be 0 and the radius R2 may be 62.5 $\pm$ 0.35 $\mu$m. In alternative aspects of the present disclosure, the radius R2 may be less than 62.5 $\mu$m.

In accordance with an embodiment of the present disclosure, a mode field diameter (MFD) value of the optical fiber 100, at a wavelength 1310 nm, may be 9.283, 9.02, 9.12, 8.97. The optical fiber 100 may have a cable cut-off value that may be one of, 1153 nm, 1163 nm, 1220 nm, 1212 nm, and 1214 nm. Further, the optical fiber 100 may have a zero-dispersion wavelength (ZDW) that may be one of, 1310 nm, 1307 nm, 1309 nm, 1311 nm, and 1310.6 nm.

In accordance with an embodiment of the present disclosure, a macro bend loss the optical fiber 100 at 20 mm bend radius and 1550 nm wavelength may be one of, 0.414 dB/turn, 0.401 dB/turn, 0.18 dB/turn, 0.186 dB/turn, and 0.231 dB/turn. Alternatively, the macro bend loss of the optical fiber 100 at 20 mm bend radius and 1625 nm wavelength may be one of, 0.935 dB/turn, 1.262 dB/turn, 0.54 dB/turn, 0.544 dB/turn, and 0.69 dB/turn. Alternatively, the macro bend loss of the optical fiber 100 at 30 mm bend radius and 1550 nm wavelength may be one of, 0.111 dB/10 turns, 0.099 dB/10 turns, 0.06 dB/10 turns, 0.31 dB/10 turns, and 0.034 dB/10 turns. Alternatively, the macro bend loss of the optical fiber 100 at 30 mm bend radius and 1625 nm wavelength may be one of, 0.588 dB/10 turns, 0.423 dB/10 turns, 0.1 dB/10 turns, 0.141 dB/10 turns, and 0.128 dB/10 turns.

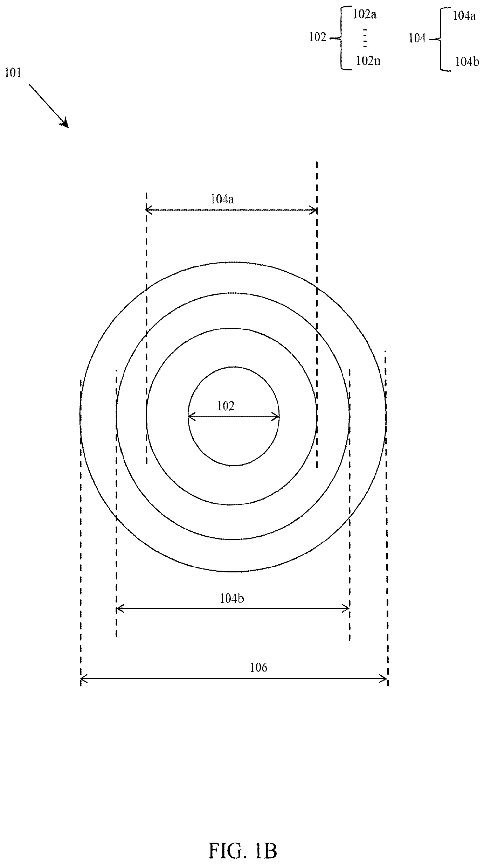

The optical fiber 101 of Fig. 1B may be the same or substantially similar to the optical fiber 100 of Fig. 1A. However, the optical fiber 101 may have a single-colored coating layer 106. For sake of brevity, same reference numerals have been used for different regions and layers of the optical fiber 101 as being used for different layers/regions of the optical fiber 100. The single-colored coating layer 106 may be positioned adjacent to the cladding region 104. In particular, the single-colored coating layer 106 may be positioned adjacent to the cladding region 104 such that the single-colored coating layer 106 surrounds the cladding region 104. Moreover, the single-coloured coating layer 106 may have a coating diameter of the optical fiber 100 that may be less than or equal to 250 $\mu$m with a tolerance value of $\pm$ 10 $\mu$m i.e., 250 $\pm$ 10 $\mu$m. Further, the single-coloured coating layer 106 may have a thickness that may be less than 65 $\mu$m.

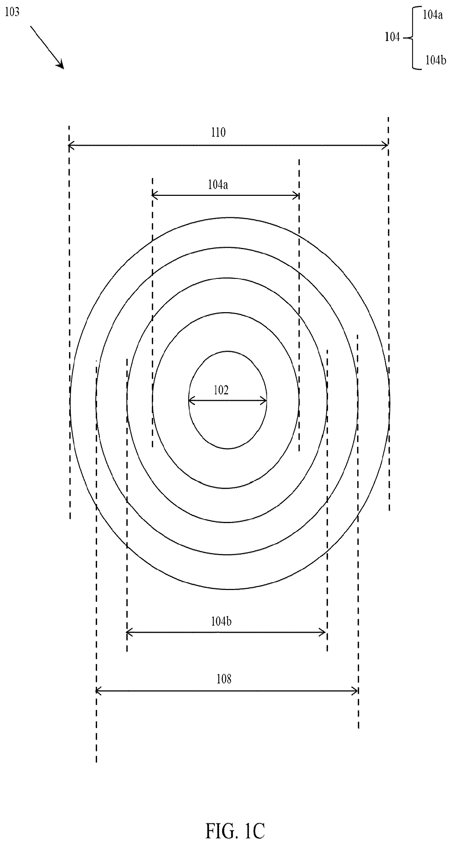

The optical fiber 103 of Fig. 1C may be the same or substantially similar to the optical fiber 100 of Fig. 1A. The optical fiber 103 may be the same or substantially similar to the optical fiber 100. However, the optical fiber 103 may have a primary coating layer 108 and a colored secondary coating layer 110. For sake of brevity, same reference numerals have been used for different regions and layers of the optical fiber 103 as being used for different layers/regions of the optical fiber 100. In particular, the primary coating layer 108 may be positioned adjacent to the cladding region 104. Moreover, the primary coating layer 108 may be positioned adjacent to the cladding region 104 such that the primary coating layer 108 surrounds the cladding region 104. Further, the colored secondary coating layer 110 may be positioned adjacent to the primary coating layer 108. Furthermore, the colored secondary coating layer 110 may be positioned adjacent to the primary coating layer 108 such that the colored secondary coating layer 110 surrounds the primary coating layer 108.

In accordance with an embodiment of the present disclosure, the optical fiber 103 may have a diameter that may be less than or equal to 180 $\mu$m. In particular, the optical fiber 103 may have a diameter that may be less than or equal to 200 $\mu$m. Alternatively, the optical fiber 103 may have a diameter that may be less than 250 $\mu$m.

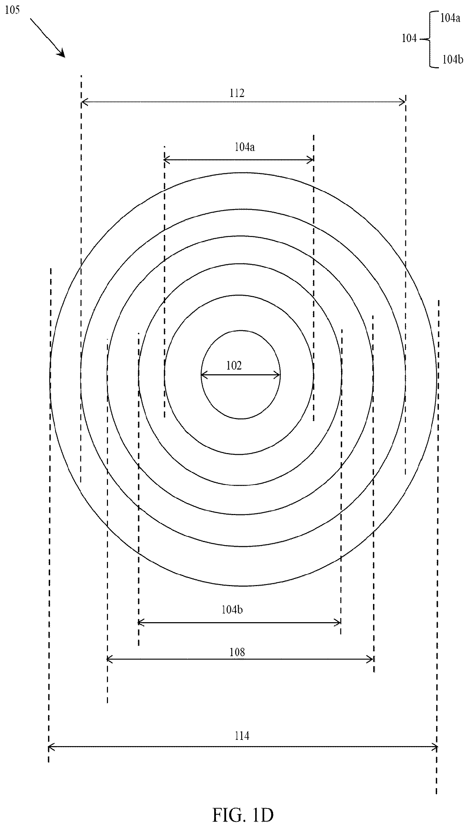

The optical fiber 105 of Fig. 1D may be the same or substantially similar to the optical fiber 100 of Fig. 1A. The optical fiber 105 may be same or substantially similar to the optical fiber 103. However, the optical fiber 105 may have a secondary coating layer 112, and an ink layer 114, instead of the colored secondary coating layer 110. For sake of brevity, same reference numerals have been used for different regions and layers of the optical fiber 105 as being used for different layers/regions of the optical fiber 103.

In accordance with an embodiment of the present disclosure, the secondary coating layer 112 may be positioned adjacent to the primary coating layer 108. Further, the secondary coating layer 112 may be positioned adjacent to the primary coating layer 108 such that the secondary coating layer 112 surrounds the primary coating layer 108.

In some aspects of the present disclosure, the primary coating layer 108 of the optical fiber 103 and 105 may have a young's modulus that may be in a range of 0.1 Mega-pascal (MPa) to 0.3 MPa. Preferably, the primary coating layer 108 of the optical fiber 103 and 105 may have the young's modulus that may be less than 0.6 MPa. Further, the primary coating layer 108 of the optical fiber 103 and 105 may have a thickness in a range of 10 $\mu$m to 30 $\mu$m.

In accordance with an embodiment of the present disclosure, the secondary coating layer 112 of the optical fiber 105 may have a young's modulus in a range of 1200 MPa to 1500 MPa. Preferably, the secondary coating layer 112 of the optical fiber 105 may have the young's modulus that may be less than 1500 MPa. The secondary coating layer 112 of the optical fiber 105 may have a thickness that may be in a range of 10 $\mu$m to 30 $\mu$m.

In accordance with an embodiment of the present disclosure, the ink layer 114 may be a colored coating layer and is positioned adjacent to the secondary coating layer 112 such that the ink layer 114 surrounds the secondary coating layer 112. In particular, the ink layer 114 may have a thickness that may be in a range of 4 $\mu$m to 8 $\mu$m.

In accordance with an embodiment of the present disclosure, the optical fiber 100, 101, 103, and 105 may have a diameter that may be less than or equal to 210 $\mu$m. The core region 102 may be independent of a sharp peak at a center (R0) of the optical fiber 100, 101, 103, and 105.

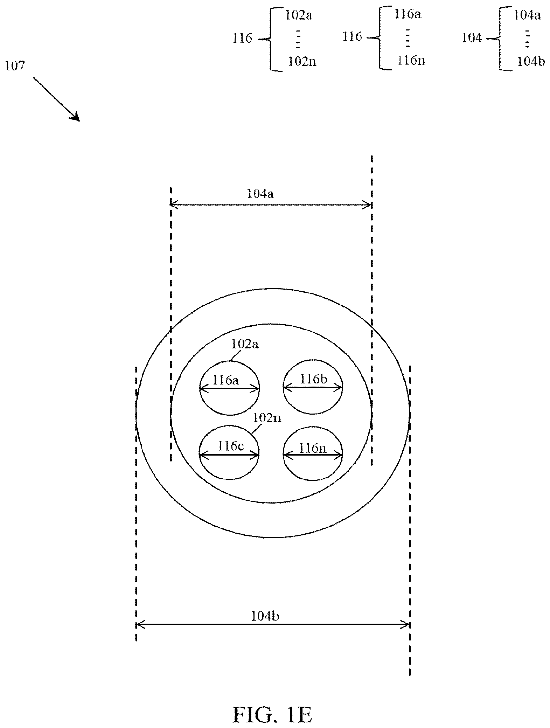

The optical fiber 107 of Fig. 1E may be the same or substantially similar to the optical fiber 100 of Fig. 1A. The optical fiber 107 may be the same or substantially similar to the optical fiber 100. However, the optical fiber 107 may have a plurality of core regions 102a-102n (hereinafter referred to and designated as "the core regions 102"), instead of a single core region 102. For sake of brevity, same reference numerals have been used for different regions and layers of the optical fiber 107 as being used for different layers/regions of the optical fiber 100. The core regions 102 may be disposed within the inner cladding region 104a. In particular, the inner cladding region 104a may be positioned adjacent to the core regions 102 such that the inner cladding region 104a surrounds the core regions 102.

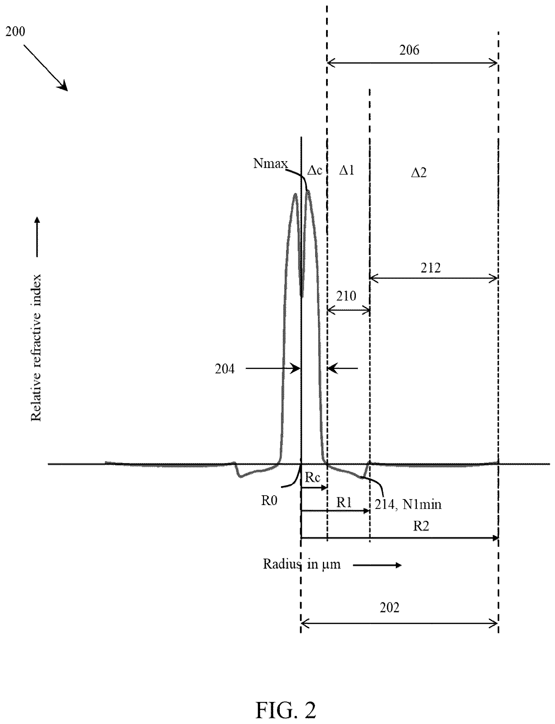

Fig. 2 is a graphical representation illustrating a refractive index profile of one optical fiber in accordance with an embodiment of the present disclosure. The graphical representation 200 may be plotted between a radius of the optical fiber 100 along a horizontal axis (X-axis) and a relative refractive index of the optical fiber 100 along vertical axis (Y-axis). The refractive index profile 202 may represent a relative refractive index of the optical fiber 100 and varies from a center of the core region 102 to a periphery of the cladding region 104. The refractive index profile 202 may have a first refractive index profile 204 and a second refractive index profile 206.

In particular, the core region 102 may have a radius $R_c$ and relative refractive index $\Delta c$. The core region 102 may have the first refractive index profile 204. The first refractive index profile 204 may have the up doped region 208 *i.e.*, the first refractive index profile 204 may be the high relative refractive index region. In particular, each core region of the core region 102 may be up-doped with the plurality of materials (hereinafter referred to as "the up-dopant materials"). The up-dopant materials may be, but not limited to, chlorine, Germanium (Ge), aromatic group material, sulfur atoms, halogens, and phosphorous based group materials. Aspects of the present disclosure are intended to include and/or otherwise cover any type of known and later developed up-dopant materials, without deviating from the scope of the present disclosure.

In accordance with an embodiment of the present disclosure, the cladding region 104 may have the second refractive index profile 206. And, the second refractive index profile 206 may have the down doped region 210 and the undoped region 212. Moreover, the down doped region 210 may have a radius $R_1$ and a relative refractive index $\Delta 1$. Further, the down doped region 210 may be a continuous region adjacent to the core region 102 such that radial position of minimum relative refractive index 214, 314 of the optical fiber 100 may be within three $\mu$m from the interface between the down doped region 210 and the undoped region 212. The down doped region 210 may be down doped with a predefined amount of fluorine (F). The predefined amount of fluorine may be very low as the depth of the down doped region 210 is very low, reducing manufacturing time of the optical fiber 100 and may further reduce cost of production associated with the optical fiber 100.

The relative refractive index in the down doped region 210 may gradually decrease from a boundary of the core region 102 to the interface between the down doped region 210 and the undoped region 212. The undoped region 212 may have a radius $R_2$ and relative refractive index $\Delta 2$.

In accordance with an embodiment of the present disclosure, the down doped region 210 may have a minimum relative refractive index 214, 314 that may be in a range of -0.05 % to -0.21 %.

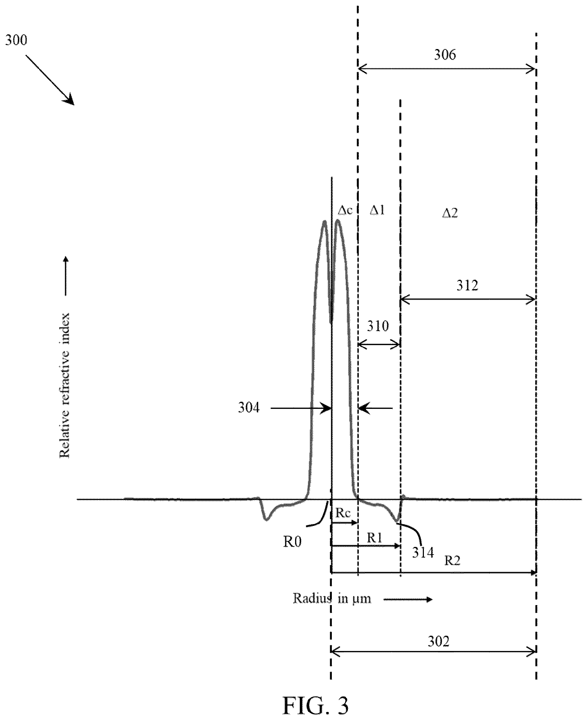

Fig. 3 is a graphical representation illustrating a refractive index profile of another optical fiber in accordance with an embodiment of the present disclosure. The graphical representation 300 may be plotted between a radius of the optical fiber 100 along a horizontal axis (X-axis) and a relative refractive index of the optical fiber 100 along vertical axis (Y-axis). The refractive index profile 302 may represent a relative refractive index of the optical fiber 100 and may vary from a center of the core region 102 to a periphery of the cladding region 104. The refractive index profile 302 may have a first refractive index profile 304 and a second refractive index profile 306.

In accordance with an embodiment of the present disclosure, the core region 102 may have a radius $R_c$ and have a relative refractive index Δc. The core region 102 may have the first refractive index profile 304 with the up doped region 308 *i.e.*, the first refractive index profile 304 may be the high relative refractive index region. In particular, each core region of the core region 102 may be up-doped with the plurality of materials (hereinafter referred to as "the up-dopant materials"). The up-dopant materials may be, but not limited to, chlorine, Germanium (Ge), aromatic group material, sulfur atoms, halogens, and phosphorous based group materials. Aspects of the present disclosure are intended to include and/or otherwise cover any type of known and later developed up-dopant materials, without deviating from the scope of the present disclosure.

The cladding region 104 may have the second refractive index profile 306 with the down-doped region 310 and the undoped region 312. The down doped region 310 may have a radius $R_1$ and a relative refractive index $\Delta 1$. The down doped region 310 may be a continuous region that may be adjacent to the core region 102 such that a radial position of the minimum relative refractive index 214, 314 of the optical fiber 100 may be within three μm from the interface between the down doped region 310 and the undoped region 312. The relative refractive index in the down doped region 310 may decrease. In particular, the relative refractive index in the down doped region 310 may gradually decrease from a boundary of the core region 102 to a point near to the interface between the down doped region 310 and the undoped region 312 and then rapidly decreases near the interface between the down doped region 310 and the undoped region 312. Further, the undoped region 312 may have a radius $R_2$ and a relative refractive index $\Delta 2$.

In some aspects of the present disclosure, the down doped region 210 may have a minimum relative refractive index 214, 314 that may be in a range of -0.05 % to - 0.21 %.

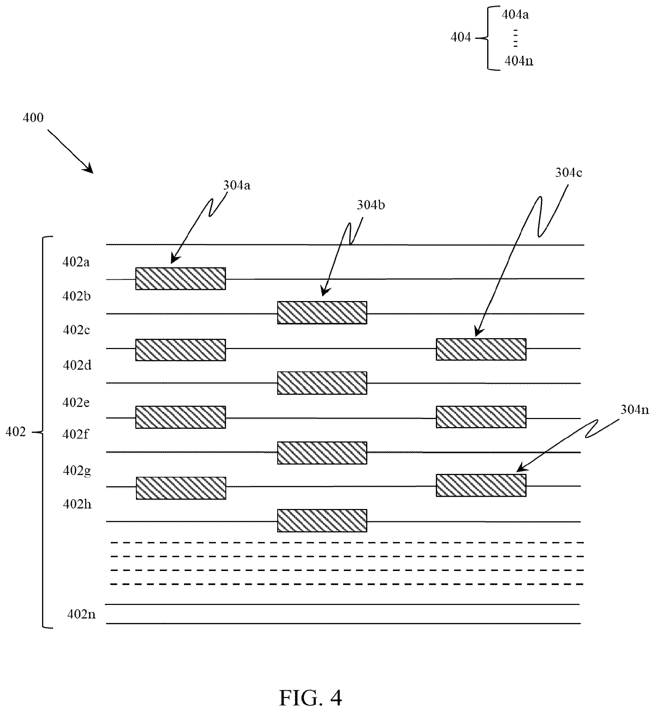

Fig. 4 is a pictorial snapshot illustrating an optical fiber ribbon in accordance with an embodiment of the present disclosure The optical fiber ribbon 400 may have a plurality of optical fibers 402a-402n (hereinafter collectively referred to and designated as "the fibers 402"). Each fiber of the fibers 402 may be same or substantially similar to the optical fiber 103 and each fiber of the fibers 402 may be structurally and functionally same or similar to the optical fiber 103. To form the optical fiber ribbon 400, at least one pair of optical fibers of the fibers 402 may be intermittently bonded along a predefined length of the optical fiber of the optical fibers 402. In particular, the at least one pair of optical fibers of the fibers 402 may be intermittently bonded along a longitudinal axis by a plurality of bonded portions 404a-404n (hereinafter collectively referred to and designated as "the bonded portions 404"). The bonded portions 404 may be adapted to bind the adjacent pair of fibers of the fibers 402.

Further, each core region of the core region 102 may be the up doped region 208 and a cladding region 104 surrounds the core region 102. The colored secondary coating layer 110 may define an outer diameter that may be in a range of 160 μm to 210 μm. The cladding region 104 may have exactly down-doped region 210, 310 and the undoped region 312. In particular, the down doped region 210, 310 may be a continuous region that may be adjacent to the core region 102 such that the minimum relative refractive index 214, 314 of each optical fiber of the optical fibers 402 may be near to the interface between the down doped region 210, 310 and the undoped region 312.

Furthermore, each optical fiber of the optical fibers 402 may have the mode field diameter that may be in a range of 8.8 μm to 9.6 μm at a wavelength 1310 nm and a cable cut-off value that may be less than or equal to 1260 nm. The cladding region 104 may define a bare fiber diameter that may be less than or equal to 125 μm with a tolerance value of 0.7 μm *i.e.*, 125 ± 0.7 μm.

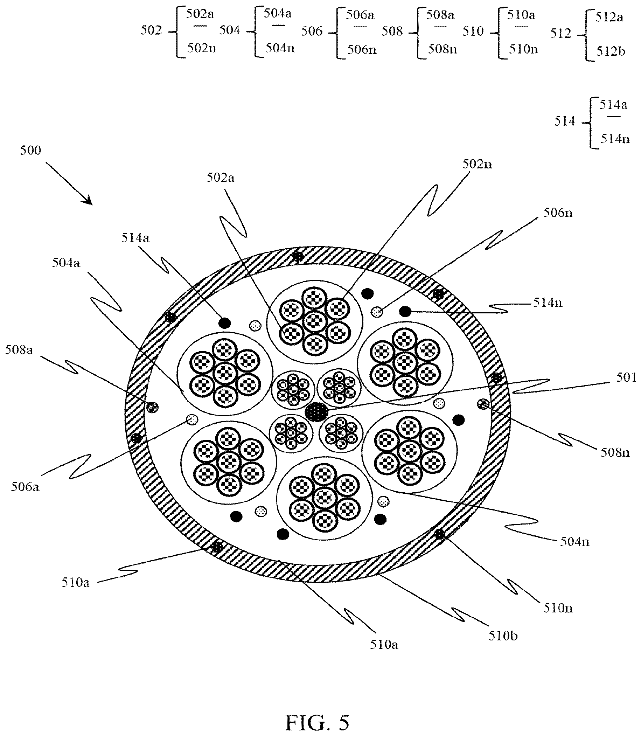

Fig. 5 is a pictorial snapshot illustrating a cross-sectional view of an optical fiber cable in accordance with an embodiment of the present disclosure.The optical fiber cable 500 may have a central strength member 501 (hereinafter referred to as "the CSM"), a plurality of optical fiber ribbons 502a-502n (hereinafter collectively referred to and designated as "the ribbons 502"), a plurality of buffer tubes 504a-504n (hereinafter collectively referred to and designated as "the buffer tubes 504"), a plurality of water swellable yarns 506a-506n (hereinafter collectively referred to and designated as "the yarns 506"), a plurality of ripcords 508a-508n (hereinafter collectively referred to and designated as "the ripcords 508"), a plurality of multiple strength members 510a-510n (hereinafter collectively referred to and designated as "the strength members 510"), and one or more sheath layers 512a, 512b (hereinafter collectively referred to and designated as "the sheath layers 512"), and one or more binders 514a-514n (hereinafter collectively referred to and designated as "the binders 514").

In accordance with an embodiment of the present disclosure, the ribbons 502, the buffer tubes 504, the yarns 506, the ripcords 508, the strength members 510, and the CSM 501 may be disposed within the optical fiber cable 500. In particular, the ribbons 502, the buffer tubes 504, the yarns 506, the ripcords 508, the strength member 510, and the CSM 501 may be disposed within the sheath layers 512.

In accordance with an embodiment of the present disclosure, the CSM 501 may be disposed at a center of the optical fiber cable 500. In particular, the CSM 501 may be disposed at the center of the optical fiber cable 500 such that the buffer tubes 504 are arranged around the CSM 501. Particularly, the CSM 501 may be adapted to provide strength to the optical fiber cable 500.

In accordance with an embodiment of the present disclosure, each ribbon of the ribbons 502 may enclose the optical fibers 518. Further, each fiber of fiber 502 may be structurally and functionally same or substantially similar to the optical fiber 100.

In accordance with an embodiment of the present disclosure, each buffer tube of the buffer tube 504 may be adapted to enclose the ribbons 502. In particular, each buffer tube of the buffer tubes 504 may be adapted to enclose one or more optical fibers of the plurality of optical fibers. Moreover, each buffer tube of the buffer tubes 504 may be arranged around the CSM 501 to form one or more layers. Further, each buffer tube of the buffer tubes 504 may be made up of a material, including but not limited to, polybutylene terephthalate (PBT). Aspects of the present disclosure are intended to include and/or otherwise cover any type of material for each buffer tube of the buffer tubes 504, without deviating from the scope of the present disclosure.

In accordance with an embodiment of the present disclosure, the binders 514 may be disposed around the buffer tubes 504 are adapted to bind the buffer tubes 504 that may be arranged around the CSM 501.

In accordance with an embodiment of the present disclosure, the yarns 506 may be disposed around the buffer tube 504. Each yarn of the yarns 506 may be a super absorbent polymer impregnated high tenacity polyester fiber base swellable yarn. The yarns 506 may be adapted to block water to enter in the buffer tubes 504. Specifically, the yarns 506 may provide water resistance to the buffer tubes 504 over a longer period of time. The yarns 506 may therefore facilitate complete water insulation and may protect the buffer tube 504 against water ingression.

In accordance with an embodiment of the present disclosure, the ripcords 508 may be disposed near to the inner periphery of the optical fiber cable 500.. In other words, the ripcords 508 may be disposed adjacent to the sheath layer 512. The ripcords 508 may be adapted to tear apart the sheath layers 512 to facilitate access to the buffer tubes 504 that may be enclosed inside the optical fiber cable 500.

Further, each ripcord of the ripcords 508 may be made up of a material, including but not limited to, aramid yarn, fiberglass epoxy, and steel. Aspects of the present disclosure are intended to include and/or otherwise cover any type of material for each ripcord of the ripcords 508, without deviating from the scope of the present disclosure.

In accordance with an embodiment of the present disclosure, the sheath layers 512 may be disposed along on an outer periphery of the optical fiber cable 500. The sheath layers 512 may enclose a plurality of strength members 516a-516n (hereinafter collectively referred to and designated as "the strength members 516"). The strength members 516 may provide the required tensile strength and stiffness to the optical fiber cable 500. Each strength member of the strength members 516 may be made up of a material, having but not limited to, a reinforced aramid yarn, a reinforced glass yarn, and steel. Aspects of the present disclosure are intended to include and/or otherwise cover any type of material for each strength member of the strength members 516, without deviating from the scope of the present disclosure.

Further, the sheath layers 512 may be made up of a material, including but not limited to, polyethylene, thermoplastic polyurethane, low smoke zero halogen (LSZH), and the like. Aspects of the present disclosure are intended to include and/or otherwise cover any type of material for the sheath layers 512, without deviating from the scope of the present disclosure.

In accordance with an embodiment of the present invention, an optical fiber 100, 101, 103, 105, 107 comprising one or more core regions 102 such that the one or more core regions 102 is an up doped region 208, 308 and a cladding region 104 that surrounds the one or more core regions 102. In particular, the cladding region 104 has exactly one down doped region 210, 310 where the down doped region 210, 310 is a continuous region adjacent to the one or more core region 102. Further, the optical fiber 100, 101, 103, 105, 107 has a mode field diameter in a range of 8.8 $\mu$m to 9.6 $\mu$m at a wavelength 1310 nanometres (nm). The optical fiber 100, 101, 103, 105, 107 has a cable cut-off of less than or equal to 1260 nm.

In accordance with an embodiment of the present invention, the optical fiber 100, 101, 103, 105, 107 has minimum relative refractive index 214, 314 positioned within three micrometres ($\mu$m) from an interface between the down doped region 210, 310 and the undoped region 212, 312.

In accordance with an embodiment of the present invention, the down doped region 210, 310 has a trench volume in a range of 3 to 4.5 $\mu$m$^2$.

In accordance with an embodiment of the present invention, the where the cladding region 104 has exactly one down doped region 210, 310 and an undoped region 212, 312.

In accordance with an embodiment of the present invention, the down doped region 210, 310 has a trench alpha in range of 1 to 3.

In accordance with an embodiment of the present invention, the down doped region 210, 310 has a minimum relative refractive index 214, 314 in a range of -0.05 to -0.21 %.

In accordance with an embodiment of the present invention, the optical fiber 100, 101, 103, 105 has:

> (i) an attenuation at 1310 nm wavelength is less than or equal to 0.33 Decibel (dB),
> (ii) an attenuation at 1383 nm wavelength is less than or equal to 0.31 dB,
> (iii) an attenuation at 1550 nm wavelength is less than or equal to 0.19 dB, and
> (iv) an attenuation at 1625 nm wavelength is less than or equal to 0.21 dB.

In accordance with an embodiment of the present invention, at least one of (i) a macro bend loss of the optical fiber

100, 101, 103, 105, 107 at 10 mm bend radius and 1625 nm wavelength is less than or equal to 1.5 dB/turn and (ii) a macro bend loss of the optical fiber 100, 101, 103, 105, 107 at 15 mm bend radius and 1625 nm wavelength is less than or equal to 0.3 dB/turn.

In accordance with an embodiment of the present disclosure, the optical fiber introduces a structure with an up-doped core region, a cladding region featuring a precisely located down-doped region, and an undoped region. The mode field diameter in the desired range and a cable cut-off below 1260 nm, meeting the requirements for advanced network access applications. Beyond reducing manufacturing costs, the optical fiber's innovative structure offers advantages like minimized macro bend losses, low attenuations at various wavelengths, and compatibility with optical fiber ribbons, providing versatility for different network configurations.

In accordance with an embodiment of the present disclosure, the presence of up-doped core regions without sharp peaks, a precisely located down-doped region with optimized trench volume and alpha values, and a specific range for the mode field diameter and cable cut-off wavelength. These features collectively address the need for a cost-effective and optimized optical fiber for network access.

In accordance with an embodiment of the present disclosure, the combination of the up-doped core precisely located down-doped region, and undoped region. The arrangement optimizes optical parameters, including mode field diameter and cable cut-off, ensuring compatibility with high-density networks. Further, the trench contributes to reduced macro bend losses, making it well-suited for various applications.

In accordance with an embodiment of the present disclosure, the optical fiber in high-density cables, enabling service providers to maximize fiber installation in existing ducts.

In accordance with an embodiment of the present disclosure, the reduced manufacturing cost and optimized optical parameters for network access scenarios, providing a balance between performance and cost-effectiveness. The optical fiber's innovative design caters to the evolving needs of network access applications, offering a solution with a balance of reduced manufacturing costs and optimized optical parameters. The compatibility with various network configurations, low macro bend losses, and attenuations at different wavelengths make it versatile for a wide range of applications in the optical fiber industry.

Advantageously, the optical fiber 100 of the present disclosure is manufactured in a cost-effective way because of less fluorination. The optical fiber 100 may be advantageously used in an application where less macro bend is not a compulsion. The optical fiber 100 may advantageously be a cost-effective solution in case of access network application. Further, the optical fiber 100 of the present disclosure provides ultra-low bend losses as well as optimized mode field diameter (MFD) values which complies with the ITU-T G.652.D and G.657.A1 recommendations and even improved optical properties as compared to the ITU-T G.652.D and G.657.A1 recommendations.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

**Claims**

1. An optical fiber (100, 101, 103, 105, 107) **characterized in that**:

   one or more core regions (102) such that the one or more core regions (102) is an up doped region (208, 308); and
   a cladding region (104) that surrounds the one or more core regions (102);
   wherein the cladding region (104) has exactly one down doped region (210, 310) and an undoped region (212, 312),
   wherein the down doped region (210, 310) is a continuous region adjacent to the one or more core region (102) such that a radial position of minimum relative refractive index (214, 314) of the optical fiber (100, 101, 103, 105, 107) is within three micrometres (μm) from an interface between the down doped region (210, 310) and the undoped region (212, 312),
wherein the optical fiber (100, 101, 103, 105, 107) has a mode field diameter in a range of 8.8 $\mu$m to 9.6 $\mu$m at a wavelength 1310 nanometres (nm), where the optical fiber (100, 101, 103, 105, 107) has a cable cut-off of less than or equal to 1260 nm.

2. The optical fiber (100, 101, 103, 105, 107) of claim 1, wherein the down doped region (210, 310) has a trench volume in a range of 3 to 4.5 $\mu m^2$.

3. The optical fiber (100, 101, 103, 105, 107) of claim 1, wherein the down doped region (210, 310) has a trench alpha in range of 1 to 3.

4. The optical fiber (100, 101, 103, 105, 107) of claim 1, the down doped region (210, 310) has a minimum relative refractive index (214, 314) in a range of -0.05 to - 0.21 %.

5. The optical fiber (100, 101, 103, 105, 107) of claim 1, wherein the down doped region (210, 310) has a thickness in a range of 8 $\mu$m to 12 $\mu$m.

6. The optical fiber (100, 101, 103, 105, 107) of claim 1, wherein the one or more core regions (102) does not have a sharp peak at a center (R0) of the one or more core regions.

7. The optical fiber (100, 101, 103, 105, 107) of claim 1, wherein

   (i) an attenuation of the optical fiber (100, 101, 103, 105) at 1310 nm wavelength is less than or equal to 0.33 Decibel (dB),
   (ii) an attenuation of the optical fiber (100, 101, 103, 105, 107) at 1383 nm wavelength is less than or equal to 0.31 dB,
   (iii) an attenuation of the optical fiber (100, 101, 103, 105, 107) at 1550 nm wavelength is less than or equal to 0.19 dB, and
   (iv) an attenuation of the optical fiber (100, 101, 103, 105, 107) at 1625 nm wavelength is less than or equal to 0.21 dB.

8. The optical fiber (100, 101, 103, 105, 107) of claim 1, wherein at least one of

   (i) a macro bend loss of the optical fiber (100, 101, 103, 105, 107) at 10 mm bend radius and 1625 nm wavelength is less than or equal to 1.5 dB/turn and
   (ii) a macro bend loss of the optical fiber (100, 101, 103, 105, 107) at 15 mm bend radius and 1625 nm wavelength is less than or equal to 0.3 dB/turn.

9. The optical fiber (100, 101, 103, 105, 107) of claim 1, wherein the core region (102) has

   (i) a core volume in a range of 4.5 to 5.5 $\mu m^2$,
   (ii) a core relative refractive index in a range of 0.37 to 0.44 %, and (iii) a core alpha value in a range of 3 to 6.

10. The optical fiber (100, 101, 103, 105, 107) of claim 1, wherein

    (i) a primary coating layer (108) surrounding the cladding region (104) has a young's modulus in a range of 0.1 to 0.3 MPa and
    (ii) a secondary coating layer (112) surrounding the primary coating layer (108) has a young's modulus in a range of 1200 to 1500 MPa.

11. The optical fiber (100, 101, 103, 105, 107) of claim 1 is used in an optical fiber ribbon (400) such that adjacent optical fibers are bonded.

12. The optical fiber (100, 101, 103, 105, 107) of claim 1 is used in an optical fiber ribbon (400) wherein at least one pair of adjacent optical fibers are bonded intermittently.

13. An optical fiber (100, 101, 103, 105, 107) **characterized in that**:
    one or more core regions (102) such that the one or more core regions (102)

is an up doped region (208, 308); and
a cladding region (104) that surrounds the one or more core regions (102);

wherein the cladding region (104) has exactly one down doped region (210, 310), wherein the down doped region (210, 310) is a continuous region adjacent to the one or more core region (102), wherein the optical fiber (100, 101, 103, 105, 107) has a mode field diameter in a range of 8.8 $\mu$m to 9.6 $\mu$m at a wavelength 1310 nanometres (nm), wherein the optical fiber (100, 101, 103, 105, 107) has a cable cut-off of less than or equal to 1260 nm.

14. The optical fiber (100, 101, 103, 105, 107) of claim 13, wherein the optical fiber (100, 101, 103, 105, 107) has minimum relative refractive index (214, 314) positioned within three micrometres ($\mu$m) from an interface between the down doped region (210, 310) and the undoped region (212, 312).

15. The optical fiber (100, 101, 103, 105, 107) of claim 13, wherein the down doped region (210, 310) has a trench volume in a range of 3 to 4.5 $\mu$m$^2$.

FIG. 1A

$$102 \left\{ \begin{array}{l} 102a \\ \vdots \\ 102n \end{array} \right. \qquad 104 \left\{ \begin{array}{l} 104a \\ 104b \end{array} \right.$$

101

FIG. 1B

103

104 { 104a
       104b

110

104a

102

104b

108

FIG. 1C

FIG. 1D

116 $\left\{\begin{array}{l} 102a \\ \vdots \\ 102n \end{array}\right.$   116 $\left\{\begin{array}{l} 116a \\ \vdots \\ 116n \end{array}\right.$   104 $\left\{\begin{array}{l} 104a \\ \vdots \\ 104b \end{array}\right.$

107

104a

102a

116a   116b

102n

116c   116n

104b

FIG. 1E

FIG. 2

FIG. 3

FIG. 4

502 ⎰ 502a ⎱  504 ⎰ 504a ⎱  506 ⎰ 506a ⎱  508 ⎰ 508a ⎱  510 ⎰ 510a ⎱  512 ⎰ 512a ⎱
   ⎱ 502n ⎰      ⎱ 504n ⎰      ⎱ 506n ⎰      ⎱ 508n ⎰      ⎱ 510n ⎰      ⎱ 512b ⎰

514 ⎰ 514a ⎱
   ⎱ 514n ⎰

FIG. 5

Europäisches
Patentamt

European
Patent Office

Office européen
des brevets

# EUROPEAN SEARCH REPORT

Application Number

EP 24 19 1566

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 094 975 B2 (CORNING INC [US]) 9 October 2018 (2018-10-09) * column 5, line 47 - column 8, line 36 * * table 2 * * figure 2 * | 1-15 | INV. G02B6/028 G02B6/036 |
| X | US 2013/136405 A1 (BOOKBINDER DANA CRAIG [US] ET AL) 30 May 2013 (2013-05-30) * paragraphs [0036] - [0063] * * table 2 * * figure 4 * | 1-15 | |
| X | EP 4 123 350 A1 (SUMITOMO ELECTRIC INDUSTRIES [JP]) 25 January 2023 (2023-01-25) * table 1 * * figure 1 * | 1-15 | |
| A | AU 2021 365 659 A1 (FUJIKURA LTD [JP]) 22 June 2023 (2023-06-22) * tables 3-5 * * figures 2,3 * | 10-12 | |
| | | | TECHNICAL FIELDS SEARCHED (IPC) |
| | | | G02B |

The present search report has been drawn up for all claims

| Place of search | Date of completion of the search | Examiner |
|---|---|---|
| The Hague | 19 December 2024 | Kloppenburg, Martin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

2

**ANNEX TO THE EUROPEAN SEARCH REPORT
ON EUROPEAN PATENT APPLICATION NO.**

EP 24 19 1566

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2024

| Patent document cited in search report | | Publication date | Patent family member(s) | | Publication date |
|---|---|---|---|---|---|
| US 10094975 | B2 | 09-10-2018 | CN | 110073257 A | 30-07-2019 |
| | | | EP | 3491437 A2 | 05-06-2019 |
| | | | JP | 2019526073 A | 12-09-2019 |
| | | | US | 2018031761 A1 | 01-02-2018 |
| | | | WO | 2018022411 A1 | 01-02-2018 |
| | | | WO | 2018022870 A2 | 01-02-2018 |
| US 2013136405 | A1 | 30-05-2013 | BR | 112014013128 A2 | 13-06-2017 |
| | | | CN | 104254793 A | 31-12-2014 |
| | | | DK | 2786185 T3 | 26-09-2016 |
| | | | EP | 2786185 A1 | 08-10-2014 |
| | | | JP | 6218744 B2 | 25-10-2017 |
| | | | JP | 2015503122 A | 29-01-2015 |
| | | | KR | 20140097338 A | 06-08-2014 |
| | | | RU | 2014126430 A | 27-01-2016 |
| | | | US | 2013136405 A1 | 30-05-2013 |
| | | | US | 2013136407 A1 | 30-05-2013 |
| | | | WO | 2013082217 A1 | 06-06-2013 |
| EP 4123350 | A1 | 25-01-2023 | BR | 112022008355 A2 | 18-10-2022 |
| | | | CN | 114641714 A | 17-06-2022 |
| | | | EP | 4123350 A1 | 25-01-2023 |
| | | | JP | WO2021187475 A1 | 23-09-2021 |
| | | | KR | 20220144793 A | 27-10-2022 |
| | | | US | 2023037687 A1 | 09-02-2023 |
| | | | WO | 2021187475 A1 | 23-09-2021 |
| AU 2021365659 | A1 | 22-06-2023 | AU | 2021365659 A1 | 22-06-2023 |
| | | | CA | 3195857 A1 | 28-04-2022 |
| | | | CN | 116324557 A | 23-06-2023 |
| | | | EP | 4231071 A1 | 23-08-2023 |
| | | | JP | 7499867 B2 | 14-06-2024 |
| | | | JP | WO2022085244 A1 | 28-04-2022 |
| | | | KR | 20230084306 A | 12-06-2023 |
| | | | TW | 202217384 A | 01-05-2022 |
| | | | US | 2023393332 A1 | 07-12-2023 |
| | | | WO | 2022085244 A1 | 28-04-2022 |

EPO FORM P0459

For more details about this annex : see Official Journal of the European Patent Office, No. 12/82

**EP 4 517 398 A1**

**Patent documents cited in the description**

- IN 202311052813

- EP 3657223 A1